# EUROPÄISCHE PATENTSCHRIFT

(11) **EP 1 387 777 B1**
(45) Veröffentlichungstag und Bekanntmachung des Hinweises auf die Patenterteilung: **17.12.2008**
(21) Anmeldenummer: 02714028.4
(22) Anmeldetag: 16.02.2002
(51) Int. Cl.: B60K 31/00, B60T 7/22, B60T 7/12, B60K 31/10

(54) **VERFAHREN ZUR REGELUNG DER GESCHWINDIGKEIT EINES KRAFTFAHRZEUGS**
METHOD FOR REGULATING THE SPEED OF A MOTOR VEHICLE
PROCEDE DE REGULATION DE LA VITESSE D'UN VEHICULE

(30) Priorität: 12.04.2001 DE 10118708
(43) Veröffentlichungstag der Anmeldung: 11.02.2004
(73) Patentinhaber: ROBERT BOSCH GMBH, 70442 Stuttgart (DE)
(72) Erfinder: HELLMANN, Manfred, 71706 Hardthof (DE); LAUXMANN, Ralph, 70825 Korntal-Muenchingen (DE); IRION, Albrecht, 70563 Stuttgart (DE)
(86) Internationale Anmeldenummer: PCT/DE2002/000575
(87) Internationale Veröffentlichungsnummer: WO 2002/083447

(56) Entgegenhaltungen:
- EP-A- 0 166 258
- EP-A- 0 612 641
- EP-A- 0 965 508
- EP-A- 1 075 977
- WO-A-99/20508
- DE-A- 2 642 211
- DE-A- 19 827 445
- US-A- 5 731 977
- US-A- 6 149 251

## Beschreibung

Die Erfindung betrifft ein Verfahren zur Regelung der Geschwindigkeit eines Kraftfahrzeugs entsprechend den im Oberbegriff von Anspruch 1 aufgeführten Maßnahmen.

Ein Verfahren dieser Art wird beschrieben in der Veröffentlichung "Adaptive Cruise Control System - Aspects and Development Trends" von Winner, Witte, Uhler und Lichtenberg, Robert Bosch GmbH, in SAE Technical Paper Series 961010, International Congress & Exposition, Detroit, 26-29 Februar 1996. Das in dieser Veröffentlichung beschriebene Regelsystem, das auch als ACC-System (Adaptive Cruise Control) bezeichnet wird, basiert auf einem Abstandssensor, beispielsweise einem mehrzielfähigen Radarsensor, der an der Frontseite des Fahrzeugs angebracht ist, um Abstände und Relativgeschwindigkeiten zu vorausfahrenden Fahrzeugen zu messen. In Abhängigkeit von den Meßdaten dieses Radarsensors wird dann die Geschwindigkeit des eigenen Fahrzeugs so geregelt, daß zu dem unmittelbar vorausfahrenden Fahrzeug ein vorbestimmter Abstand eingehalten wird, den der Fahrer in der Form einer sogenannten Sollzeitlücke bestimmen kann. Wenn sich kein vorausfahrendes Fahrzeug im Ortungsbereich des Radars befindet, erfolgt eine Regelung auf eine vom Fahrer eingestellte Wunschgeschwindigkeit.

Normalerweise greift dieses System beispielsweise über eine Drosselklappe in das Antriebssystem des Fahrzeugs ein, so daß die Fahrzeuggeschwindigkeit über das Antriebsdrehmoment des Motors geregelt wird. Wenn jedoch beispielsweise auf Gefällstrecken oder, wenn abstandsbedingt eine stärkere Verzögerung des Fahrzeugs erforderlich ist, das Schleppmoment des Motors nicht ausreicht, eine ausreichende Verzögerung des Fahrzeugs zu bewirken, so erfolgt ein Eingriff in das Bremssystem des Fahrzeugs.

Um eine stabile Regelung zu ermöglichen und Beeinträchtigungen des Komforts oder der Fahrsicherheit zu vermeiden, sollte das Regelsystem mit möglichst kurzer Verzögerungszeit auf die an das Antriebs- oder Bremssystem ausgegebenen Stellbefehle reagieren. Bei einer Aktivierung der Fahrzeugbremse ergibt sich jedoch eine gewisse Ansprechverzögerung daraus, daß die Radbremszylinder und die übrigen Komponenten des hydraulischen Bremssystems ein gewisses Totvolumen aufweisen, das zunächst mit Bremsflüssigkeit gefüllt werden muß, bevor die Bremsen an den einzelnen Rädern des Fahrzeugs tatsächlich wirksam werden.

Aus DE 196 15 294 ist eine Vorrichtung zur Steuerung der Bremskraft an den Rädern eines Fahrzeugs bekannt, bei dem zeitlich vor dem eigentlichen, für die Einstellung des erforderlichen Bremsmomentes notwendigen Druckaufbau, ein geringer Bremsdruck in Form eines zeitlich begrenzten Füllpulses in das Bremssystem eingespeist wird. Der Füllpuls wird hier individuell für die Radbremsen der einzelnen Räder in Abhängigkeit von Bewegungsgrößen des Fahrzeugs erzeugt, insbesondere in Abhängigkeit von einer Regelabweichung der Querbeschleunigung des Fahrzeugs und deren zeitlicher Ableitung. Ähnlich beschreibt DE-OS 34 23 063 ein Antriebsschlupfregelsystem für Fahrzeuge, bei dem die Einspeisung eines geringen Bremsdruckes in Abhängigkeit von der Änderung der Drosselklappenstellung, in Abhängigkeit von der Fahrzeuggeschwindigkeit bzw. Abhängigkeit von Schlupfschwellen erfolgt, die unterhalb der Ansprechschwelle für die eigentliche Antriebsschlupfregelung liegen.

Aus der DE 198 27 445 ist eine gattungsgemäße Fahrtsteuervorrichtung für ein Kraftfahrzeug bekannt, das in der Lage ist, einen Bremsvorgang durchzuführen, der die Absicht des Fahrers erfüllt, wenn das Fahrzeug mittels der Fahrtsteuerung verzögert wird, wobei eine erhöhte Sicherheit erzielt wird. Während der Steuerung der Verzögerung berechnet die Sollverzögerungs-Berechnungseinrichtung einen Soll-Verzögerungsgrad des betroffenen Fahrzeugs in Übereinstimmung mit einem Verzögerungsgrad des vorausfahrenden Fahrzeugs. Wenn der Soll-Verzögerungsgrad kleiner als ein vorgegebener Verzögerungsgrad ist, steuert die Bremssteuereinrichtung eine Betätigung einer Betätigungseinrichtung, um ein Bremssystem derart anzusteuern, daß eine Bremskraft erzeugt wird, die dem Soll-Verzögerungsgrad entspricht. Wenn der Soll-Verzögerungsgrad dem vorgegebenen Verzögerungsgrad gleicht oder größer ist als dieser, wird die Betätigungseinrichtung andererseits so betätigt, daß das Bremssystem so angesteuert wird, daß eine Hilfsbremskraft erzeugt wird, die dem vorgegebenen Verzögerungsgrad entspricht.

Aus der WO 99/20508 ist ein Bremssystem für Kraftfahrzeuge bekannt, bei dem, das Bremssystem einen assistierten Bremsmodus aufweist, der insbesondere bei einer automatischen Geschwindigkeitsregelung eingesetzt wird. Dabei wird zunächst eine variable Verzögerung durch die Betätigung des Bremspedals durch den Fahrer vorgegeben, die durch die Bremseinrichtung umgesetzt wird. Die Bremsassistenzeinheit, ist dabei im Stande, die Bremseinrichtung gemäß einem automatischen Notbremsmodus zu steuern, in welchem die Verzögerung maximal ist, wobei hierzu die Signale eines Objektsensors ausgewertet werden.

Aus der US 6,149,251 ist eine Vorrichtung und ein Verfahren zur Steuerung der Bremskraft an wenigstens einem Rad eines Fahrzeuges bekannt, welche ein Mittel zur Ermittlung eines, die Fahrzeugbewegung beschreibenden und/oder beeinflussenden Kriteriums, enthält, ein Mittel zur Vermittlung einer die Raddynamik des zugehörigen Rades beschreibenden Größe aufweist und Mittel aufweist, mit denen in Abhängigkeit des ermittelten, die Fahrzeugbewegung beschreibenden und/oder beeinflussenden, Kriteriums festgestellt wird, ob ein fahrerunabhängiger Bremseneingriff an einem Rad absehbar ist. Desweiteren enthält die Vorrichtung bzw. das Verfahren Mittel, mit denen bei Vorliegen der Erfordernis eines absehbaren fahrerunabhängigen Bremseneingriffes, zeitlich vor diesem absehbaren fahrerunabhängigen Bremseneingriff, eine geringfügige Betätigung variabler Dauer der dem Rad zugeordneten Aktuatoren durchführbar ist. Die Dauer der geringfügigen Betätigung der Aktuatoren wird dabei wenigstens in Abhängigkeit der die Raddynamik des zugehörigen Rades beschreibenden Größen ermittelt.

### Aufgabe, Lösung und Vorteile der Erfindung

Aufgabe der Erfindung ist es, ein Verfahren zur Geschwindigkeitsregelung gemäß Anspruch 1 auszubilden, das die Ansprechzeit auf einen an das Bremssystem ausgegebenen Stellbefehl verkürzt.

Diese Aufgabe wird erfindungsgemäß durch die Merkmale des Anspruchs 1 gelöst.

Unter "Vorspannen" des Bremssystems soll hier allgemein eine Maßnahme verstanden werden, die das Bremssystem in einen

Zustand versetzt, in dem es schneller auf einen Bremsbefehl reagieren kann, ohne daß bereits eine wesentliche. Bremswirkung eintritt. Dieses Vorspannen kann beispielsweise dadurch geschehen, daß in den Radbremszylindern und/oder in den Komponenten des Hydrauliksystems, die diesen unmittelbar vorgelagert sind, schon ein gewisser Bremsdruckaufbau erfolgt, so daß sich die Bremsbacken bereits an die Bremsscheibe oder - trommel der Radbremse annähern oder diese gar schon berühren, ohne daß jedoch schon eine nennenswerte Reibungskraft ausgeübt wird. Alternativ oder zusätzlich kann das Vorspannen auch dadurch bewirkt werden, daß in einem Druckakkumulator oder in einem Bremskraftverstärker ein gewisser Vordruck bereitgestellt wird, der bei tatsächlicher Betätigung der Bremse ein schnelleres Auffüllen des Totvolumens ermöglicht.

Da das Signal zum Vorspannen des Bremssystems, im folgenden auch als "Füllsignal" bezeichnet, nicht erst im Bremssystem selbst, sondern bereits im Rahmen der Geschwindigkeitsregelung erzeugt wird, läßt sich der Vorteil des rascheren Bremsdruckaufbaus auch für die Geschwindigkeitsregelung nutzbar machen.

Wenn im Rahmen der Geschwindigkeitsregelung, aus welchen Gründen auch immer, ein Eingriff in das Bremssystem des Fahrzeugs erforderlich wird, so kündigt sich dies stets dadurch an, daß das Beschleunigungsanforderungssignal negativ wird und sich einem Wert nähert, bei dem die durch den Fahrwiderstand und das Schleppmoment des Motors erreichbare Verzögerung nicht mehr ausreicht und folglich auf Bremsbetrieb umgeschaltet werden muß. Durch Vergleich des Beschleunigungsanforderungssignals mit einem geeigneten Schwellenwert ist es deshalb möglich, eine bevorstehende Umschaltung auf den Bremsbetrieb frühzeitig zu erkennen und vorbeugend das Bremssystem vorzuspannen, so daß das Bremssystem im tatsächlichen Aktivierungsfall rascher reagiert. Durch die so erreichte Verkürzung der Regelverzögerung können unerwünschte Regelschwingungen besser unterdrückt werden. Im Fall einer Abstandsregelung bedeutet dies zugleich auch, daß die Unterschreitung des Sollabstands minimiert wird, so daß nicht nur der Komfort verbessert, sondern auch die Fahrsicherheit erhöht wird.

Da als Kriterium für die Ausgabe des Füllsignals erfindungsgemäß eine Schwellenwertunterschreitung des Beschleunigungsanforderungssignals benutzt wird, ist die Anwendung des Verfahrens unabhängig davon, welche Regelungsziele mit der Geschwindigkeitsregelung verfolgt werden und welche Regelalgorithmen im einzelnen benutzt werden. Das erfindungsgemäße Verfahren ist daher bei einer großen Bandbreite unterschiedlicher Regelungskonzepte anwendbar und ermöglicht eine hohe Flexibilität hinsichtlich späterer Modifikationen oder Erweiterungen des Regelsystems.

Vorteilhafte Ausgestaltungen der Erfindung ergeben sich aus den Unteransprüchen.

Vorzugsweise ist das Kriterium für die tatsächliche Aktivierung des Bremssystems dadurch definiert, daß das Beschleunigungsanforderungssignal eine Auslöseschwelle unterschreitet, die ihrerseits in Abhängigkeit von der Fahrsituation dynamisch variiert werden kann. Der Schwellenwert für das Vorspannen des Bremssystems kann dann um einen festen Differenzbetrag über dieser Auslöseschwelle liegen. In der Praxis ist für die zeitliche Änderungsrate des Beschleunigungsanforderungssignals eine untere Schranke definiert, die sicherstellt, daß der Komfort und das Sicherheitsgefühl der Fahrzeuginsassen nicht durch ruckartig einsetzende Verzögerungen beeinträchtigt wird. Anhand dieser Schranke und anhand der durch die Bauart der Bremsanlage bestimmten Füllzeit, die zum Vorspannen des Bremssystems benötigt wird, läßt sich der Differenzbetrag zwischen dem Schwellenwert für das Vorspannen des Bremssystems und der tatsächlichen Auslöseschwelle stets so wählen, daß der Vorspannvorgang abgeschlossen ist, bevor die Bremse tatsächlich aktiviert wird.

Die maßgebliche Größe für die Bestimmung der Auslöseschwelle ist die maximale Fahrzeugverzögerung, d.h., die minimale (negative) Beschleunigung aₘᵢₙ, die durch das Schleppmoment des Motors (bei maximal geschlossener Drosselklappe) erzeugt werden kann. Diese minimale Beschleunigung amin ist in erster Linie von der Getriebestufe und von den Betriebsbedingungen des Motors abhängig und kann aus Größen errechnet werden, die durch das Motorsteuersystem und andere Steuerungselemente oder Sensoren des Fahrzeugs über einen Datenbus bereitgestellt werden. Zur Verfeinerung können für die Bestimmung von amin auch weitere Kriterien herangezogen werden, insbesondere die Steigung oder das Gefälle der Fahrbahn sowie ggf. die Zuladung des Fahrzeugs. Die relevanten Größen können direkt gemessen oder mittelbar aus dem Zusammenhang zwischen dem aktuellen Ausgangsdrehmoment des Motors und der gemessenen Fahrzeugbeschleunigung abgeleitet werden. Das Ausgangsdrehmoment des Motors kann seinerseits entweder direkt gemessen oder aus den auf dem Datenbus verfügbaren Informationen über den Zustand der Drosselklappe, des Zündsystems, des Einspritzsystems etc. ermittelt werden.

Gemäß einer vorteilhaften Augestaltung wird das Füllsignal spätestens nach Ablauf einer bestimmten Zeitspanne wieder gelöscht. Falls das Beschleunigungsanforderungssignal über längere Zeit in dem Intervall zwischen dem Schwellenwert für das Vorspannen und der Auslöseschwelle bleibt, weil sich die Fahrbedingungen in diesem Bereich stabilisiert haben, wird so vermieden, daß die Bremse unnötig lange vorgespannt bleibt. Falls es schon vor Ablauf dieser Zeitspanne zur tatsächlichen Aktivierung der Bremse kommt, so wird das Füllsignal schon bei Betätigung der Bremse zurückgesetzt. Ebenso wird das Füllsignal auch zurückgesetzt, wenn die Bremse nicht im Rahmen der Geschwindigkeitsregelung automatisch betätigt wird, sondern wenn der Fahrer selbst in das Geschehen eingreift und das Bremspedal betätigt.

Erfindungsgemäß wird das Füllsignal erneut eingeschaltet, wenn im Rahmen der Geschwindigkeitsregelung wieder von Bremsbetrieb auf Motorbetrieb umgeschaltet und somit die Bremse gelöst wird. Das Füllsignal bleibt dann eingeschaltet, bis das Beschleunigungsanforderungssignal wieder den Schwellenwert überschreitet oder bis eine vorbestimmte Zeitspanne abgelaufen ist. Durch diese Maßnahme wird eine erhöhte Bremsbereitschaft aufrechterhalten, falls das Beschleunigungsanforderungssignal ständig um die Auslöseschwelle pendelt.

Um ein häufiges Umschalten des Regelsystems zwischen Motorbetrieb und Bremsbetrieb zu vermeiden, kann es zweckmäßig sein, eine bestimmte Hysterese vorzusehen. In diesem Fall ist die Auslöseschwelle für das Umschalten auf Bremsbetrieb durch einen Beschleunigungswert a_{hys} gegeben, der kleiner ist als aₘᵢₙ, während das Zurückschalten auf Motorbetrieb erfolgt, wenn das Beschleunigungsanforderungssignal wieder größer wird als aₘᵢₙ. Falls das Hysterese-Intervall zwischen amin und a_{hys} dynamisch variiert wird, ist es zweckmäßig, den Schwellenwert für die Erzeugung des Füllsignals an a_{hys} zu koppeln. Der Schwellenwert, bei dem nach dem Lösen der Bremse das Füllsignal wieder abfällt, kann dagegen an amin gekoppelt bleiben.

### Zeichnung

Im folgenden werden Ausführungsbeispiele der Erfindung anhand der Zeichnung näher erläutert.
Es zeigen:
- Fig.1: ein Blockdiagramm eines Geschwindigkeitsregelsystems zur Durchführung des Verfahrens;
- Fig.2: ein Zeitdiagramm von Signalen, die in dem Regelsystem nach Figur 1 auftreten; und
- Fig.3: ein Zeitdiagramm entsprechend Figur 2, für eine abgewandelte Ausführungsform der Erfindung.

### Beschreibung von Ausführungsbeispielen

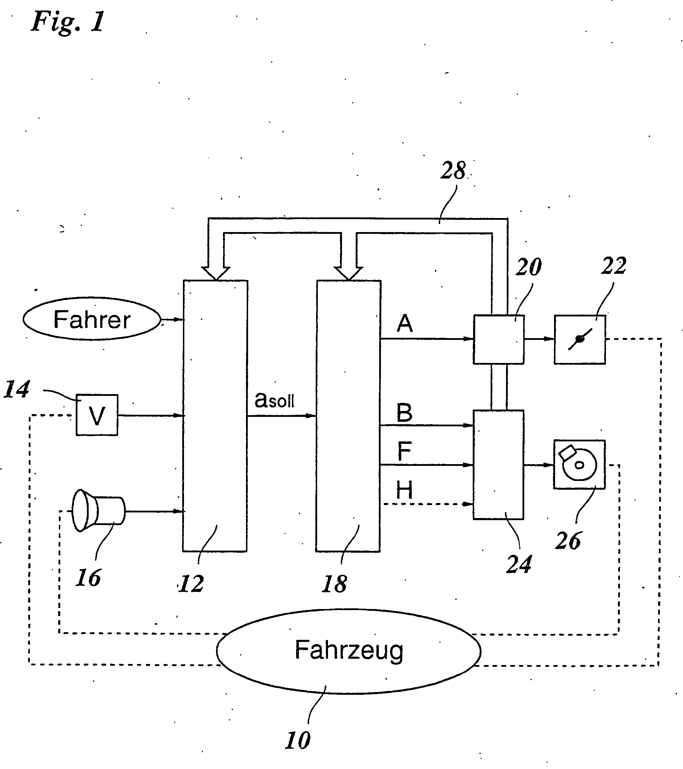

In Figur 1 ist symbolisch ein Kraftfahrzeug gezeigt, dessen Geschwindigkeit mit Hilfe eines elektronischen Reglers 12 geregelt wird. Hierzu erhält der Regler 12 von einem Geschwindigkeitssensor 14 ein Signal, das die Istgeschwindigkeit des Fahrzeugs angibt. Weiterhin ist vorn am Fahrzeug ein Abstandssensor, im gezeigten Beispiel ein Radarsensor 16 angebaut, der Abstands- und Relativgeschwindigkeitsdaten von georteten, vor dem Fahrzeug befindlichen Objekten an den Regler 12 meldet. Vorzugsweise hat der Radarsensor 16 ein gewisses Winkelauflösungsvermögen, so daß auch die Azimutwinkel der georteten Objekte erfaßt und an den Regler 12 gemeldet werden können. Auf diese Weise ist es dem Radarsystem und/oder dem Regler 12 möglich, vorausfahrende Fahrzeuge auf der eigenen Fahrspur von Fahrzeugen auf anderen Fahrspuren.sowie von Standzielen am Fahrbahnrand zu unterscheiden. Wenn sich vorausfahrende Fahrzeuge auf der eigenen Fahrspur befinden, so wird das unmittelbar vorausfahrende Fahrzeug als Zielobjekt ausgewählt, und die Geschwindigkeit des Kraftfahrzeugs 10 wird so geregelt, daß ein bestimmter Sollabstand zu dem vorausfahrenden Fahrzeug eingehalten wird. Dieser Sollabstand ist vom Fahrer wählbar durch Eingabe einer Sollzeitlücke, die den zeitlichen Abstand angibt, in dem das vorausfahrende Fahrzeug und das eigene Fahrzeug denselben Punkt auf der Fahrbahn passieren. Der Sollabstand wird somit' dynamisch an die jeweilige Fahrgeschwindigkeit angepaßt.

Wenn die Fahrbahn vor dem eigenen Fahrzeug frei ist, so erfolgt, falls der Fahrer einen entsprechenden Befehl gegeben hat, eine Regelung auf eine vom Fahrer gewählte Wunschgeschwindigkeit.

Darüber hinaus wertet der Regler 12 auch Bedienungsbefehle sowie Fahrbefehle des Fahrers aus, insbesondere den Grad der Betätigung des Gaspedals und ggf. des Bremspedals. Der Fahrer hat somit jederzeit die Möglichkeit, aktiv in das Geschehen einzugreifen, um in kritischen Fahrsituationen angemessen zu reagieren.

Im Regler 12 sind somit verschiedene Regelungs- und Steuerungsstrategien implementiert, und je nach Fahrsituation oder Befehlen des Fahrers werden ein oder mehrere Regelstrategien ausgewählt, und ihre Ergebnisse werden, wie im Stand der Technik bekannt ist, in geeigneter Weise zu einem Beschleunigungsanforderungssignal aₛₒₗₗ verknüpft, das die augenblickliche Sollbeschleunigung des Fahrzeugs angibt.

Eine Entscheidungseinheit 18 entscheidet anhand des Beschleunigungsanforderungssignals aₛₒₗₗ, ob ein Eingriff in das Antriebssystem oder in das Bremssystem des Fahrzeugs erforderlich ist. Bei positiven Werten des Beschleunigungsanforderungssignals erfolgt ein Eingriff in das Antriebssystem. In diesem Fall wird ein Stellbefehl A an ein elektronisches Motorsteuersystem 20 ausgegeben, das über verschiedene Aktoren, hier symbolisiert durch eine Drosselklappe 22, auf den Motor des Kraftfahrzeugs 10 einwirkt. Allgemein können die Funktionen des Motorsteuersystems 20 die Steuerung der Drosselklappe 22, die Steuerung des Kraftstoff-Einspritzsystems, der Zündung und anderer Komponenten des Antriebssystems des Fahrzeugs umfassen. Im Fall eines Fahrzeugs mit Automatikgetriebe kann dazu auch die Wahl der Getriebestufe gehören. Anhand des Stellbefehls A und der aktuellen Betriebsparameter des Motors steuert das Motorsteuersystem 20 den Motor so an, daß ein dem Beschleunigungsanforderungssignal entsprechendes Antriebsdrehmoment des Motors erzeugt wird.

Wenn das Beschleunigungsanforderungssignal aₛₒₗₗ negative Werte annimmt, so wird zunächst durch das Motorsteuersystem 20 der Motor gedrosselt, so daß das Schleppmoment des Motors zur Verzögerung des Fahrzeugs ausgenutzt wird. Wenn jedoch die Entscheidungseinheit 18 feststellt, daß die so erzielbare Fahrzeugverzögerung nicht ausreicht, die Istbeschleunigung des Fahrzeugs mit der durch aₛₒₗₗ repräsentierten Sollbeschleunigung in Übereinstimmung zu halten, so wird durch die Entscheidungseinheit 18 auf Bremsbetrieb umgeschaltet. In diesem Fall bleibt der Motor gedrosselt, und die Entscheidungseinheit 18 liefert einen Stellbefehl B an ein Brems-Steuersystem 24 des Fahrzeugs.

Das Brems-Steuersystem 24 steuert über die hydraulische Bremsanlage des Fahrzeugs die Funktion der an den einzelnen Rädern angeordneten Bremsen 26 und erfüllt beispielsweise die Funktion eines Antiblockiersystems, eines Antriebsschlupfregelsystems und/oder eines ESP-Systems zur dynamischen Stabilisierung des Fahrzeugs.

Die hydraulische Bremsanlage des Fahrzeugs ist aus Gründen der Ausfallsicherheit direkt mit dem Bremspedal des Fahrzeugs gekoppelt und enthält mindestens einen Druckerzeuger oder Booster, der die vom Fahrer über das Bremspedal ausgeübte Bremskraft verstärkt. Im Rahmen der Antriebsschlupfregelung oder des ESP-Systems ist der Druckerzeuger auch in der Lage, unabhängig von der Betätigung des Bremspedals einen Bremsdruck aufzubauen und die Bremsen 26 zu betätigen. Ebenso löst auch der von der Entscheidungseinheit 18 übermittelte Stellbefehl B eine Betätigung der Bremse mit fester oder variabler Bremskraft aus.

Wenn bei unbetätigter Fahrzeugbremse und drucklosen Radbremszylindern der Stellbefehl B ausgegeben wird, so müssen zunächst die unvermeidlich in der hydraulischen Bremsanlage und insbesondere in den Radbremszylindern vorhandenen Totvolumina mit Bremsflüssigkeit aufgefüllt werden, bevor es tatsächlich zu einem Reibschluß zwischen den Bremsbacken und den Bremstrommeln oder Bremsscheiben kommt und die Bremse wirksam wird. Um die für das Auffüllen dieser Totvolumina benötigte Zeit zu verkürzen, weist das Brems-Steuersystem 24 eine Funktion auf, die es gestattet, eine Vorbefüllung der Bremsanlage zu veranlassen. Bei diesem Vorgang, der hier als "Vorspannen" bezeichnet werden soll, wird die Bremsanlage so weit unter Druck gesetzt, daß die Totvolumina aufgefüllt werden und die Bremsbeläge dicht an die Bremsscheiben oder Bremstrommeln heranrücken oder diese sogar schon leicht berühren. Im letzteren Fall wird ein geringfügiger Verschleiß an der Bremse in Kauf genommen.

Diese Vorspannfunktion kann nicht nur innerhalb des Brems-Steuersystems 24 ausgelöst werden, sondern sie kann auch extern durch einen entsprechendes Füllsignal ausgelöst werden, das in der Form eines Flags F von der Entscheidungseinheit 18 ausgegeben wird. Je nach Zustand der Bremsanlage bewirkt somit das Setzen des Flags F, daß von der Brems-Steuereinheit 24 ein Vorbefüllen der Bremsanlage ausgelöst wird. Wird das Flag F wieder zurückgesetzt, so wird dieser Vorbefüllvorgang von der Brems-Steuereinheit 24 rückgängig gemacht, sofern nicht inzwischen eine tatsächliche Aktivierung der Bremse durch den Stellbefehl B erfolgt ist.

Je nach Bauart der Bremsanlage kann in dem Brems-Steuersystem 24 auch eine Funktion "Halten" implementiert sein, die dafür sorgt, daß der vorbefüllte Zustand der Bremsanlage nach dem Lösen der Bremse beibehalten wird. Dies kann etwa dadurch geschehen, daß der Betrieb einer Rückförderpumpe, die die Bremsflüssigkeit aus dem Radbremszylinder zurückfördert, vorübergehend ausgesetzt wird. In diesem Fall kann auch die Funktion "Halten" durch Setzen eines entsprechenden Flags H extern von der Entscheidungseinheit 18 aufgerufen werden.

Die Parameter, die den Zustand des Motors und der Bremsanlage des Fahrzeugs kennzeichnen, sind in dem Antriebssteuersystem 20 bzw. dem Brems-Steuersystem 24 verfügbar und können über einen Datenbus 28 (CAN-Bus) an andere Systemkomponenten des Fahrzeugs übermittelt werden, so daß sie im Bedarfsfall auch für eine Auswertung im Regler 12 und in der Entscheidungseinheit 18 zur Verfügung stehen.

Die durch den Eingriff in das Antriebssystem oder das Bremssystem des Fahrzeugs verursachten Änderungen der Fahrzeugbeschleunigung führen zu entsprechenden Änderungen der Fahrzeuggeschwindigkeit und des Abstands zum vorausfahrenden Fahrzeug und werden über den Geschwindigkeitssensor 14 und den Radarsensor 16 zurückgekoppelt.

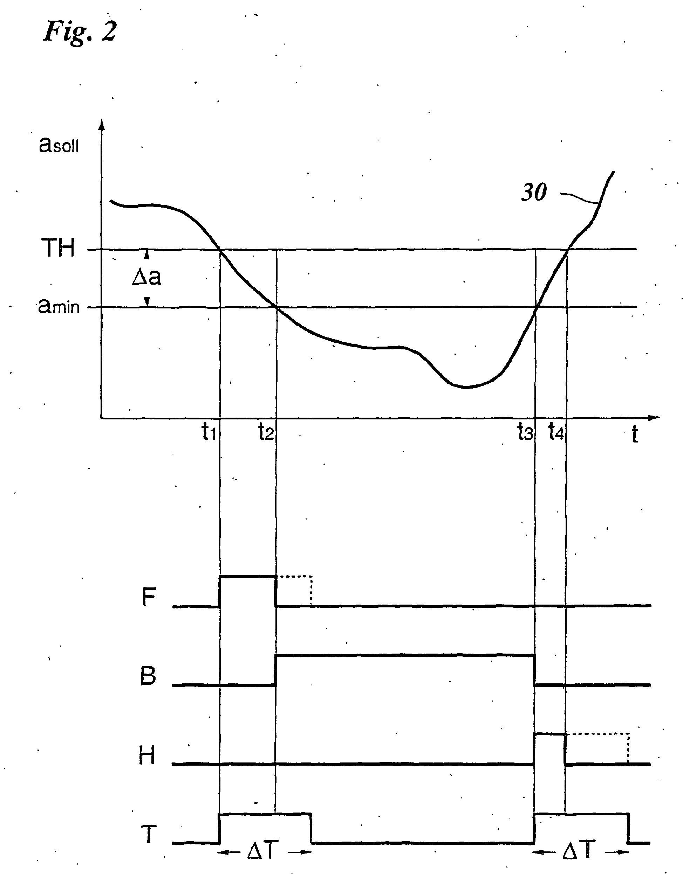

In Figur 2 zeigt die Kurve 30 im oberen Teil des Diagramms ein Beispiel für den zeitlichen Verlauf des Beschleunigungssignals aₛₒₗₗ, das vom Regler 12 ausgegeben wird. Ein Beschleunigungswert amin repräsentiert die kleinstmögliche (negative) Beschleunigung, die unter den aktuellen Betriebsbedingungen mit dem Schleppmoment des Motors erzeugbar ist. Dieser Beschleunigungswert aₘᵢₙ stellt eine Auslöseschwelle dar, bei der die Entscheidungseinheit 18 von Motorbetrieb auf Bremsbetrieb umschaltet. Wenn aₛₒₗₗ zur Zeit t₂ unter die Auslöseschwelle amin sinkt, wird daher durch die Entscheidungseinheit 18 der Stellbefehl B an das Brems-Steuersystem 24 ausgegeben.

Die Auslöseschwelle aₘᵢₙ ist zunächst von Betriebsparametern des Motors und des Getriebes abhängig, beispielsweise von der Drehzahl, der aktuellen Motortemperatur und dergleichen. Diese Daten sind über das Bussystem 28 verfügbar und können zur Berechnung von amin herangezogen werden. Weiterhin ist amin auch von externen Bedingungen abhängig, insbesondere vom Gefälle der Fahrbahn und von der trägen Masse des Fahrzeugs einschließlich Zuladung. Die dadurch bedingten Korrekturen an amin können.durch Vergleich des Beschleunigungs-Stellbefehls A mit der resultierenden Istbeschleunigung des Fahrzeugs abgeschätzt werden. In einer vereinfachten Ausführungsform des Verfahrens kann amin jedoch auch als konstant angenommen werden. In einem praktischen Beispiel liegt amin etwa in der Größenordnung von -0,5 m/s².

In Figur 2 ist weiterhin ein Schwellenwert TH angegeben, der um einen festen Betrag Δa größer ist als aₘᵢₙ. Wenn aₛₒₗₗ zur Zeit t₁ diesen Schwellenwert TH unterschreitet, so wird das Flag F gesetzt und damit das Vorbefüllen der Bremsanlage eingeleitet. Die Zeit τ, die für die Vorbefüllung der Bremsanlage benötigt wird, beträgt je nach Bauart etwa 200 bis 300 ms. Der Regler 12 ist so ausgebildet, daß die zeitliche Änderungsrate des Beschleunigungssignals aₛₒₗₗ nach unten beschränkt ist, z.B. gilt: d/dt(aₛₒₗₗ) > - 1,0 m/s³. Damit die Vorbefüllung der Bremsanlage in der Zeitspanne zwischen t₁ und t₂ abgeschlossen werden kann, muß deshalb gelten: Δa > |τ * d/dt(aₛₒₗₗ)|. Im hier angenommenen Beispiel wäre deshalb Δa = 0,35 m/s² ein geeigneter Wert, um den der Schwellenwert TH über der Auslöseschwelle amin liegen sollte. Mit aₘᵢₙ = -0,5 m/s² folgt deshalb: TH = -0,15 m/s².

Wenn das Beschleunigungsanforderungssignal aₛₒₗₗ unter die Auslöseschwelle amin sinkt und die Bremse tatsächlich ausgelöst wird, so wird das Flag F wieder zurückgesetzt. Falls aₛₒₗₗ die Auslöseschwelle amin nicht erreicht, wird das Flag F spätestens nach Ablauf einer vorgegebenen Zeitspanne AT zurückgesetzt, die durch das Signal T eines Zeitgebers bestimmt wird. Der Zeitgeber wird gestartet, wenn aₛₒₗₗ den Schwellenwert TH erreicht (bei t₁), und das Signal T fällt dann nach Ablauf der vorgegebenen Zeitspanne ΔT wieder ab. Mit der abfallenden Flanke wird auch das Flag F wieder zurückgesetzt, falls es dann noch aktiv ist. Dieser Fall ist in Figur 2 bei dem Signalverlauf des Flags F gestrichelt eingezeichnet.

Im gezeigten Beispiel steigt das Beschleunigungsanforderungssignal aₛₒₗₗ zur Zeit t₃ wieder über die Auslöseschwelle amin an, und zu diesem Zeitpunkt schaltet die Entscheidungseinheit 18 wieder auf Motorbetrieb um, so daß der an das Brems-Steuersystem 24 ausgegebene Stellbefehl B wieder abfällt. Zu diesem Zeitpunkt wird das Flag H gesetzt, das bewirkt, daß die Bremsanlage im vorgespannten Zustand bleibt. Falls das Beschleunigungsanforderungssignal wieder unter die Auslöseschwelle amin sinkt, ohne zwischendurch den Schwellenwert TH zu erreichen, kann somit die Bremse wieder ohne Verzögerung aktiviert werden. Erst wenn das Beschleunigungsanforderungssignal aₛₒₗₗ wieder über den Schwellenwert TH angestiegen ist (zur Zeit t₄) oder wenn erneut die Zeitspanne ΔT abgelaufen ist, wird das Flag H wieder zurückgesetzt, und der vorgespannte Zustand der Bremsanlage wird aufgehoben.

Auf diese Weise wird mit einem sehr einfach zu implementierenden Verfahren sichergestellt, daß die Bremsanlage des Fahrzeugs mit kleinstmöglicher Verzögerung auf den Stellbefehl B zur Aktivierung der Bremse reagiert.

Im einfachsten Fall wirken die Flags F und H auf die Bremsanlage des Fahrzeugs als Ganzes. Es ist jedoch auch möglich, diese Flags individuell auf jedes einzelne Rad oder getrennt auf die Vorderräder und die Hinterräder wirken zu lassen. Falls die Vorderradbremsen und die Hinterradbremsen unterschiedlich aufgebaut sind, kann somit Δa individuell an die für die betreffende Bremse benötigte Vorbefüllzeit angepaßt werden.

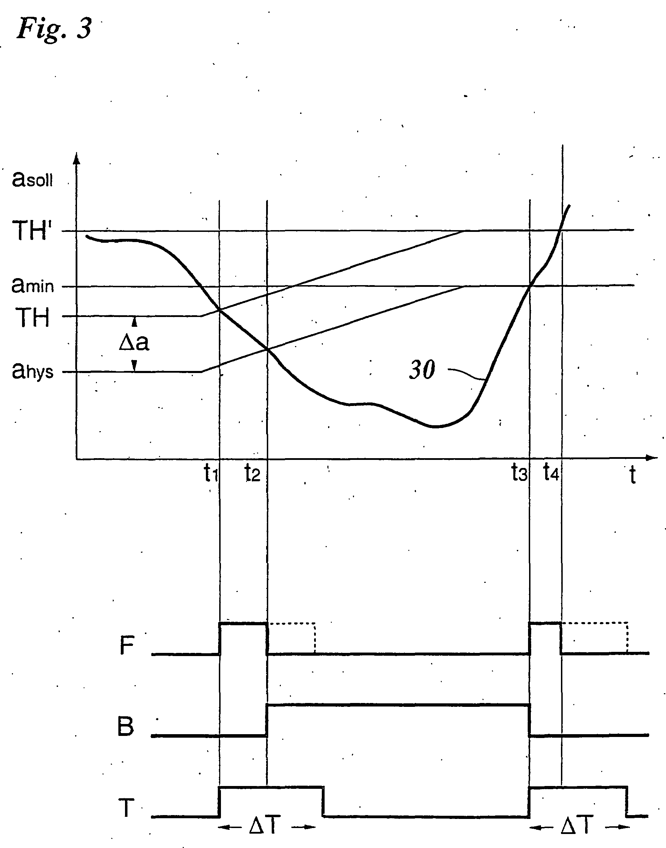

Figur 3 illustriert ein Ausführungsbeispiel, bei dem die Auslöseschwelle, bei der der Stellbefehl B an das Brems-Steuersystem 24 ausgegeben wird, nicht unmittelbar durch aₘᵢₙ, sondern durch einen etwas kleineren Beschleunigungswert a_{hys} gegeben ist. Das Zurückschalten auf Motorbetrieb erfolgt dagegen zu dem Zeitpunkt (t₃), an den das Beschleunigungsanforderungssignal aₛₒₗₗ wieder größer wird als aₘᵢₙ. Durch diese Hysteresefunktion wird vermieden, daß die Entscheidungseinheit 18 "flackernd" zwischen Bremsbetrieb und Motorbetrieb umschaltet. Das Hystereseintervall aₘᵢₙ-a_{hys} ist jedoch nicht statisch, sondern wird in diesem Beispiel dynamisch variiert. Von dem Augenblick an, an dem das Beschleunigungsanforderungssignal aₛₒₗₗ den Wert amin unterschreitet, wird das Hystereseintervall mit konstanter Änderungsrate auf 0 verringert, so daß a_{hys} sich dem Wert aₘᵢₙ annähert. So wird erreicht, daß zwar eine kurzzeitige Unterschreitung von amin toleriert wird, doch wenn diese Unterschreitung länger anhält, kommt es durch die Anhebung der Auslöseschwelle a_{hys} doch zu einer Umschaltung auf Bremsbetrieb (im gezeigten Beispiel zur Zeit t₂). Der Schwellenwert TH, der das Setzen des Flags F bestimmt, ist hier so definiert, daß er stets um einen festen Betrag Δa über der variablen Auslöseschwelle a_{hys} liegt. Das Zurücksetzen des Flags erfolgt wieder bei tatsächlicher Auslösung der Bremse oder nach Ablauf der Zeitspanne ΔT.

Weiterhin illustriert Figur 3 den Fall, daß in dem Brems-Steuersystem 24 nicht die Funktion "Halten" implementiert ist und folglich von der Entscheidungseinheit 18 auch kein Flag H gesetzt wird. Wenn zur Zeit t₃ die Bremse gelöst wird, so wird bei der in Figur 3 gezeigten Ausführungsform erneut das Flag F gesetzt, damit die erhöhte Reaktionsbereitschaft der Bremse noch für eine gewisse Zeit erhalten bleibt. Wenn das Beschleunigungsanforderungssignal aₛₒₗₗ weiter ansteigt und einen Schwellenwert TH' überschreitet, der um Δa größer ist als aₘᵢₙ, wird das Flag F wieder zurückgesetzt (zur Zeit t₄). Spätestens wird das Flag jedoch nach Ablauf der Zeitspanne ΔT zurückgesetzt.

Die im Zeitgeber eingestellte Zeitspanne ΔT kann in beiden Ausführungsbeispielen ihrerseits in Abhängigkeit vom Betriebszustand variiert werden.

## Patentansprüche

1. Verfahren zur Regelung der Geschwindigkeit eines Kraftfahrzeugs (10), bei dem ein Beschleunigungsanforderungssignal (aₛₒₗₗ) erzeugt wird, das eine positive oder negative Sollbeschleunigung des Fahrzeugs repräsentiert, und in Abhängigkeit von diesem Signal ein Stellbefehl (B) an das Bremssystem (24, 26) des Fahrzeugs ausgegeben wird, wobei ein Signal (F) zum Vorspannen des Bremssystems (24, 26) ausgegeben wird, wenn das Beschleunigungsanförderungssignal (aₛₒₗₗ) einen Schwellenwert (TH) unterschreitet, der oberhalb eines Wertes (amin; a_{hys}) liegt, bei dem das Bremssystem (24, 26) aktiviert wird, wobei das Signal (F) zum Vorspannen des Bremssystems zurückgesetzt wird, wenn das Bremssystem tatsächlich aktiviert wird,
und wobei das Signal (F) zum Vorspannen des Bremssystems erneut gesetzt wird oder ein Signal (H) zum Halten der Vorspannung des Bremssystems gesetzt wird, wenn das Bremssystem deaktiviert wird,
**dadurch gekennzeichnet, daß** das erneut gesetzte Signal (F) zum Vorspannen des Bremssystems oder das Signal (H) zum Halten der Vorspannung zurückgesetzt wird, wenn das Beschleunigungsanforderungssignal (aₛₒₗₗ) wieder den Schwellenwert (TH; TH') überschreitet.

2. Verfahren nach Anspruch 1, **dadurch gekennzeichnet, daß** eine Auslöseschwelle (aₘᵢₙ; a_{hys}), bei der das Bremssystem (24, 26) durch Ausgabe des Stellbefehls (B) aktiviert wird, in Abhängigkeit von der Fahrzeugverzögerung bestimmt wird, die unter den aktuellen Betriebsbedingungen durch das Schleppmoment des Motors erzeugbar ist, und daß der Schwellenwert (TH), bei dem das Signal (F) zum Vorspannen des Bremssystems ausgegeben wird, um einen bestimmten Betrag Δa über dieser Auslöseschwelle (aₘᵢₙ; a_{hys}) liegt.

3. Verfahren nach Anspruch 2, **dadurch gekennzeichnet, daß** die zeitliche Änderungsrate des Beschleunigungsanforderungssignals (aₛₒₗₗ) durch eine untere Schranke beschränkt ist und daß Δa dem Betrage nach größer ist als das Produkt aus dieser unteren Schranke und der Zeit, die zum Vorspannen des Bremssystems benötigt wird.

4. Verfahren nach einem der vorstehenden Ansprüche, **dadurch gekennzeichnet, daß** das Signal (F) zum Vorspannen des Bremssystems und/oder das Signal (H) zum Halten der Vorspannung jeweils spätestens nach Ablauf einer festen oder zustandsabhängig variablen Zeitspanne (Δt) zurückgesetzt wird.

## Claims

1. Method for regulating the speed of a motor vehicle (10), in which an acceleration request signal (aₛₑₜₚ) which represents a positive or negative set point acceleration of the vehicle is generated, and as a function of this signal an actuator instruction (B) is output to the brake system (24, 26) of the vehicle, wherein a signal (F) for prestressing the brake system (24, 26) is output if the acceleration request signal (aₛₑₜₚ) drops below a threshold value (TH) which is above a value (aₘᵢₙ; a_{hys}) at which the brake system (24, 26) is activated, wherein the signal (F) for prestressing the brake system is reset if the brake system is actually activated,
and wherein the signal (F) for prestressing the brake system is set again or a signal (H) for maintaining the prestress of the brake system is set if the brake system is deactivated,
**characterized in that** the signal (F) which is set again for prestressing the brake system or the signal (H) for maintaining the prestress is reset if the acceleration request signal (aₛₑₜₚ) exceeds the threshold value (TH; TH') again.

2. Method according to Claim 1, **characterized in that** a triggering threshold (aₘᵢₙ; a_{hys}) at which the brake system (24, 26) is activated as a result of the actuator instruction (B) being output, is determined as a function of the deceleration of the vehicle which can be generated by the drag torque of the engine under the current operating conditions, and **in that** the threshold value (TH) at which the signal (F) for prestressing the brake system is output is above this triggering threshold (aₘᵢₙ; a_{hys}) by a specific amount Δa.

3. Method according to Claim 2, **characterized in that** the rate of change of the acceleration request signal (aₛₑₜₚ) over time is limited by a lower limit, and **in that** Δa is larger in absolute value than the product of this lower limit and the time which is required to prestress the brake system.

4. Method according to one of the preceding claims, **characterized in that** the signal (F) for prestressing the brake system and/or the signal (H) for maintaining the prestress are each reset at the latest after the expiry of a time period (Δt) which is fixed or variable as a function of state.

## Revendications

1. Procédé de régulation de la vitesse d'un véhicule automobile (10) selon lequel :
- on génère un signal de demande d'accélération (aₛₒₗₗ), qui représente une accélération de consigne positive ou négative du véhicule, et en fonction de ce signal, on émet un ordre d'actionnement (B) destiné au système de freinage (24, 26) du véhicule,
- on émet un signal (F) pour assurer la précontrainte du système de freinage (24, 26) si le signal de demande d'accélération (aₛₒₗₗ) passe en dessous d'une valeur de seuil (TH) située au-dessus d'une valeur (aₘᵢₙ; a_{hys}), pour laquelle le système de freinage (24, 26) est activé,
- on neutralise le signal (F) de précontrainte du système de freinage si le système de freinage est effectivement activé, et
- on remet à l'état le signal (F) de précontrainte du système de freinage ou encore on met à l'état un signal (H) pour tenir la précontrainte du système de freinage si le système de freinage a été neutralisé,
**caractérisé en ce qu'**
on neutralise le signal (F) de précontrainte du système de freinage qui a été remis à l'état ou le signal (H) pour tenir la précontrainte si le signal de demande d'accélération (aₛₒₗₗ) dépasse de nouveau la valeur de seuil (TH; TH').

2. Procédé selon la revendication 1,
**caractérisé en ce qu'**
on détermine un seuil de déclenchement (aₘᵢₙ; a_{hys}) pour lequel le système de freinage (24, 26) est activé par l'émission de l'ordre d'actionnement (B), en fonction de la décélération du véhicule,
ce seuil de déclenchement étant généré dans les conditions actuelles de fonctionnement par le couple de trainé du moteur, et
la valeur de seuil (TH) pour laquelle le signal (F) de précontrainte du système de freinage est émis, se situe au-dessus de ce seuil de déclenchement (aₘᵢₙ ; a_{hys}) selon une valeur (Δa) définie.

3. Procédé selon la revendication 2,
**caractérisé en ce que**
le taux de variation dans le temps du signal de demande d'accélération (aₛₒₗₗ) est limité par une limite inférieure, et
l'amplitude de la valeur (Δa) est supérieure à celle du produit de cette limite inférieure et du temps nécessaire à la précontrainte du système de freinage.

4. Procédé selon les revendications précédentes,
**caractérisé en ce qu'**
on neutralise le signal (F) de précontrainte du système de freinage et/ou le signal (H) de maintien de la précontrainte, respectivement au plus tard à la fin d'une période de temps (Δt) fixe ou variable en fonction de l'état.
